# EUROPEAN PATENT SPECIFICATION

(11) **EP 0 611 455 B1**
(45) Date of publication and mention of the grant of the patent: **27.11.2002**
(21) Application number: 92920692.8
(22) Date of filing: 16.09.1992
(51) Int. Cl.: G02C 7/08, A61F 2/16

(54) **TELEDIOPTRIC SYSTEM**
TELEDIOPTRISCHES SYSTEM
SYSTEME TELEDIOPTRIQUE

(30) Priority: 06.11.1991 US 788478
(43) Date of publication of application: 24.08.1994
(73) Proprietor: Advanced Medical Optics, Inc., Santa Ana, CA 92705 (US)
(72) Inventor: CHOU, Jim-Son, J., Irvine, CA 92715 (US); CUMMINGS, Charles, A., Newport Beach, CA 92668 (US)
(74) Representative: Hutchins, Michael Richard
(86) International application number: PCT/US92/07837
(87) International publication number: WO 93/009464

(56) References cited:
- FR-E- 58 495
- US-A- 4 429 959
- US-A- 4 863 468
- US-A- 5 030 231

## Description

The present invention generally relates to telescopic, or magnifying, spectacles and more particularly is directed to an adjustable magnifying spectacle for use by individuals having severely impaired vision or having implanted intraocular lenses.

Implantation of intraocular lenses, for example, cataract lenses, has now become commonplace. Many types of intraocular lenses are utilized which are implanted into the eye of an individual and consist of an optic lens and haptic for fixing of the intraocular lens in an anterior chamber or a posterior chamber of the eye. Many of these intraocular lenses are of a single focal length, and it is therefore necessary for the user to utilize spectacles or the like in order to enable the individual to correct his vision for a range outside of the fixed-focus implanted intraocular lens.

In the event that, after a lens is implanted, the patient's vision continues to change, the magnification required may be greater than can be supplied by spectacles having a single objective lens therein. Consequently, changes or variations in the individual's vision must be accommodated by a refitting of glasses or the like, which is both time-consuming and expensive.

Thus, because of the unique problems surrounding the individual with implanted lenses, proper correction to obtain improved visual acuity of the individual is difficult. Because of the fixed focal length of the implanted intraocular lens, problems are encountered in switching from various viewing situations, such as reading to, for example, the watching of television. In most instances, the design of a single objective lens assembly mounted in a conventional spectacle frame is unable to provide proper improved vision for various viewing situations.

FR-A-58495 discloses spectacles in which a pair of telescopic lens systems are mounted on the spectacle frame, the eye piece of the telescopic lens system being fixed in the plane of the frame, whilst the objective lens systems are mounted on a slideable cylindrical support. Both telescopic lens systems are linked to an adjusting mechanism thereby providing simultaneous adjustment of the distances between the eye piece and objective lens systems.

US-A-5030231 describes a lens system in which an objective lens must be rotated in order to adjust the distance between the lens and the eye.

The present invention provides a spectacle system which together with an intraocular lens forms a Galilean telescope system for magnifying images to aid the vision of the impaired individual in order to increase the eye's resolving ability. As may be used hereinafter, this system may be considered a teledioptric system.

Generally, a spectacle, or teledioptric, system, in accordance with the invention for individuals having implant intraocular lenses includes objective lens systems for forming in cooperation with the implanted lenses images of a distant objection on the retinal of the eyes. A spectacle frame is provided for supporting the objective lens system on an individual relationship with the implanted intraocular lens.

In accordance with the present invention, means are provided for causing non-rotational and translational movement of the objective lens along an optic axis defined by the objective lens means and the implanted intraocular lens in order to adjust the vertex distance between the objective lens means and the implanted intraocular lens. The adjustability of the vertex distance is crucial to the clarity of the image. Importantly, the translational movement of the objective lens means maintains any astigmatic correction which is not possible if the lens is rotated as typically occurs in conventional telescopic systems.

Accordingly, the invention provides a spectacle system according to claim 1.

For individuals having two implanted intraocular lenses, the spectacle system according to the present invention includes two lens systems, one for each eye of the individual, which are independently adjustable for accommodating and adjusting the vertex distance between each lens system and the associated implanted intraocular lens.

Accordingly, in one embodiment of the invention, there is provided a spectacle system as hereinbefore defined which is provided with first and second objective lens systems; first and second mounting structures carried by the spectacle frame for mounting the first and second objective lens systems, respectively, on the spectacle frame for non-rotational and translational movement relative to the spectacle frame along separate optical axes; the spectacle frame being constructed to support said objective lens systems on an individual's head in a spaced apart relationship with the individual's eyes, respectively; and
first and second driving mechanisms associated with the first and second mounting structures respectively, each of said driving mechanisms including a rotatable actuator having a threaded portion, each of said actuators being rotatable to rotate the threaded portion of the actuator to impart said non-rotational and translational movement to the objective lens system relative to the spectacle frame along the associated optical axis in order to adjust the distance between such objective lens system and the individual's eye whereby each of said first and second objective lens systems can be separately adjusted.

The mounting structure can include a lens holder for supporting the objective lens system and an outer body which slideably receives the lens holder. The driving mechanism can include a rotatable actuator having a threaded portion and a driver having a threaded portion, the driver having a segment and the outer body having a slot which receives the segment of the driver, and the segment of the driver being drivingly coupled to the lens holder, and the actuator being rotatable and co-operable with the threaded portion of the driver to impart non-rotational and translational movement to the objective lens system.

### BRIEF DESCRIPTION OF THE DRAWINGS

The advantages and features of the present invention will be better understood by the following description when considered in conjunction with the accompanying drawings in which:
Figure 1 is a perspective view of the present invention showing only one of the lens systems attached to a spectacle frame;
Figure 2 is a schematic diagram of the operation of the lens system in conjunction with an implanted intraocular lens;
Figure 3 is an enlarged perspective view of one of the lens systems of the present invention when assembled;
Figure 4 is an exploded view of one of the lens systems of the present invention; and
Figure 5 is an alternative embodiment of one of the lens systems of the present invention.

### DETAILED DESCRIPTION OF THE DRAWINGS

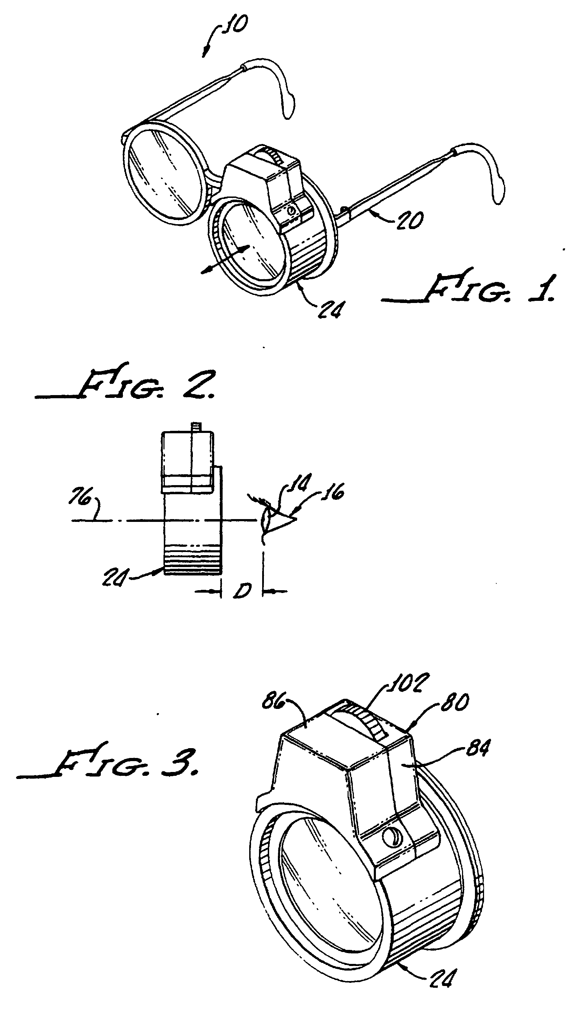

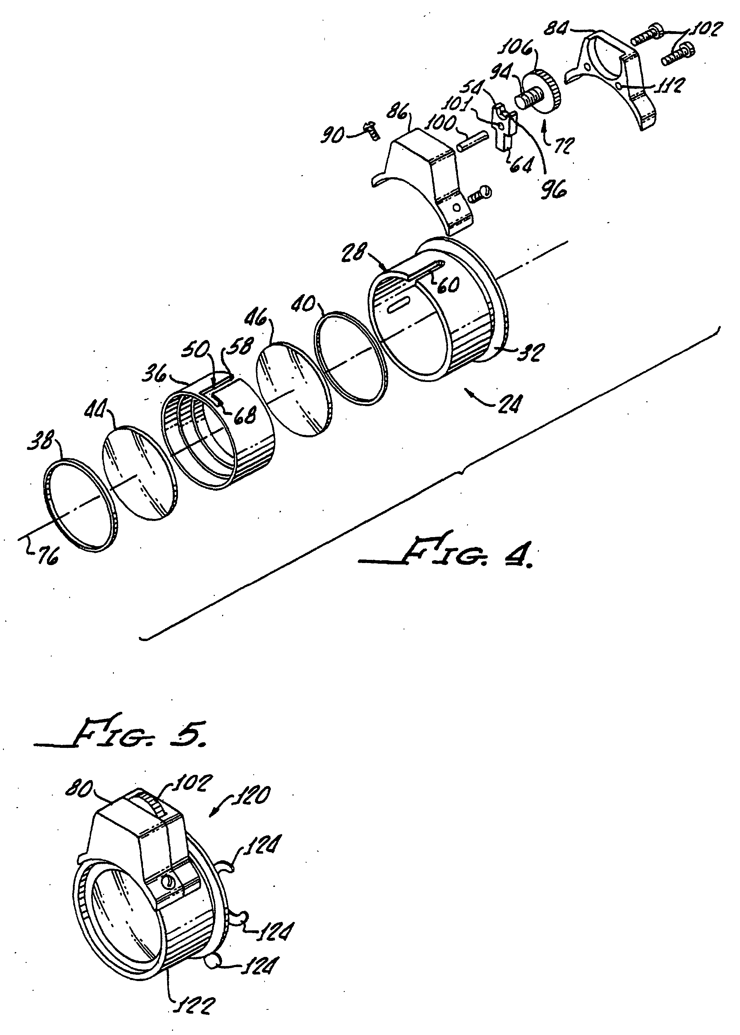

Turning now to Figure 1, there is shown a spectacle system 10 for individuals (not shown) having at least one intraocular lens 14, as represented in Figure 2. The lens may be implanted in any conventional manner and may be positioned in an anterior chamber of the individual's eye 16 or a posterior chamber of the individual's eye 16.

Generally, the spectacle, or teledioptric, system 10 includes a spectacle frame 20 which provides means for supporting an objective lens system 24 in a spaced apart relationship with the implanted intraocular lens 14, as shown in Figure 2.

It should be appreciated that while only one objective lens system 24 is shown in the figures, two identical lens systems 24 may be mounted on the frame 20 in a side-by-side relationship for individuals having two implanted intraocular lenses. In addition, the spectacle system 10 in accordance with the present invention may also be suitable for individuals having impaired vision.

The objective lens system 24 provides a means for forming an image of a distant object on the implanted intraocular lens. As shown in Figures 3 and 4, the lens system 24 includes a lens barrel 28 formed from a cylindrical member having a circumference and rear perimeter 32 sized for fitting into the spectacle frame 20 in a conventional manner. A lens holder 36 is provided along with snap rings 38, 40 for supporting lens pieces 44, 46. While two lens pieces 44, 46 are shown, it should be appreciated that any lens system and combination of lenses may be utilized as may be prescribed for increasing the visual acuity of the individual user including astigmatic correction.

As shown, the lens holder 36 is sized for being slidably mounted in the lens barrel 28 and includes an L-shaped slot 50 for enabling engagment with a driver 54 as will be described hereinafter in greater detail.

Upon assembly, a long portion 58 of the slot 50 and a slot 60 in the lens barrel 28 enable a depending portion 64 of the driver 54 to align the lens holder 36 with the lens barrel 28. After insertion of the lens holder 50 into the lens barrel 28, rotation of the lens holder 50 in a counter-clockwise manner enables the driver 54 to engage an L portion 68 of the slot 50.

The driver 54, along with an actuator 72, provides a means for causing non-rotational and translational movement of the lens holder 36 along an optical axis 76, as represented by an arrow 78, in order to adjust the vertex distance D, see Figure 2, between the objective lens system 24 and the implanted intraocular lens 14.

The driver 54 and actuator 72 are supported by a housing 80 which includes a rear portion 84 and a front portion 86, the latter being attached to the lens barrel 28 by screws 90.

The actuator 72 includes a threaded portion 94 for engagement with a threaded hole 96 in the driver 64. As shown in Figure 4, a dowel 100 extends through a hole 101 in the driver 64 when the housing rear 84 and front 86 portions are attached by screws 102 with the actuator 72 and the driver 64 therebetween. Upon assembly, a knurled wheel 106 of the actuator 72 protrudes from the housing 80, as shown in Figure 3, enabling manual rotation thereof in order to move the driver and lens holder in a translational manner.

An alternative spectacle system 120, in accordance with the present invention, includes a lens blank 122 having clips 124 thereon for attachment to a conventional pair of glasses, not shown.

The spectacle system, or teledioptric 10, in accordance with the present invention, is particularly useful for providing enhanced visual acuity at various focal lengths. For example, the user may adjust the lens holder 36 by way of the wheel 102 to provide clear television viewing and alternatively, when reading, further adjustment of the lens holder 122 provides comfortable reading vision.

## Claims

1. A spectacle system for use in conjunction with an implanted intra-ocular lens (10) in each eye, comprising:
a spectacle frame (20);
two objective lens systems (24); the spectacle frame independently supporting each objective lens system by
an individual mounting structure carried by the spectacle frame (20) for mounting the objective lens system (24) on the spectacle frame (20) for individual non-rotational and translational movement relative to the spectacle frame (20) along an optical axis (76) defined by the objective lens system and the corresponding implanted intra-ocular lens;
the spectacle frame (20) being constructed to support said objective lens systems on an individual's head in a spaced apart relationship with the implanted intra-ocular lenses and each objective lens system comprising; indivdually
a driving mechanism (54,72) including a movable actuator (54,72) for imparting said non-rotational and translational movement of the objective lens system (24) relative to the spectacle frame (20) along the optical axis (76) in order to adjust the distance between the objective lens system (24) and the at least one implanted intra-ocular lens;
the optical characteristics of the objective lens system (24) and the range of translational movement provided being selected to complement the optical characteristics of each implanted intra-ocular lens such as to enable the forming of images of a variety of variously positioned distant objects onto the retina of the eyes.

2. A spectacle system according to claim 1, each of said driving mechanisms (54,72) including a rotatable actuator (72) having a threaded portion (94), each of said actuators (72) being rotatable to rotate the threaded portion (94) of the actuator to impart said non-rotational and translational movement to the objective lens system (24) relative to the spectacle frame (20) along the associated optical axis (76) in order to adjust the distance between such objective lens system (24) and the individual's eye whereby each of said first and second objective lens systems (24) can be separately adjusted.

3. A spectacle system as defined in claim 2 wherein the first driving mechanism (54, 72) includes a driver (54) having a threaded portion (96) which is driven by rotation of the threaded portion (94) of the actuator (72) of the first driving mechanism (54, 72) to impart said non-rotational and translational movement to the first objective lens system (24).

4. A spectacle system as defined in claim 3 wherein the threaded portion (94) of the actuator (72) of the first driving mechanism (54, 72) includes a screw (94) and the threaded portion (96) of the driver (54) includes a hole in the driver receiving the screw (94).

5. A spectacle system is defined in claim 3 wherein the first mounting structure has a slot (60) and the driver has a segment (64) received in the slot.

6. A spectacle system as defined in claim 3 wherein the first mounting structure includes a lens holder (36) for supporting the first objective lens system (24) and an outer body which slidably receives the lens holder (36), said driver (54) has a segment (64) and said outer body has a slot (60) which receives said segment (64) of the driver (54) and said segment (64) of the driver (54) is drivingly coupled to the lens holder (36).

7. A spectacle system as defined in claim 6 including a housing (80) mounted on the outer body, said threaded portions (94,96) of the actuator (72) and the driver (54) of the first driving mechanism being received in the housing (80).

8. A spectacle system as defined in claim 7 wherein the actuator (72) of the first driving mechanism includes a wheel (106) which protrudes from the housing (80) to enable manual rotation of the actuator (72) of the first driving mechanism to impart non-rotational and translational movement to the driver (54) and the lens holder (36).

9. A spectacle system as defined in claim 2 wherein the first driving mechanism (54, 72) includes a driver (54) having a threaded portion (96) which is driven by rotation of the threaded portion (94) of the actuator (72) of the first driving mechanism to impart said non-rotational and translational movement to the first objective lens system (24), the spectacle system (10) includes a housing (80) mounted on the first mounting structure, said threaded portions (94, 96) of the actuator (72) and the driver (54) of the first driving mechanism being received in the housing (80).

10. A spectacle system as defined in claim 2 including first and second housings (80) carried by the first and second mounting structures respectively, the actuators (72) of the first and second driving mechanisms being partially received in the first and second housings (80), respectively, and projecting from the associated housing (80) to enable separate manual rotation of the actuators (72).

11. A spectacle system (10) according to claim 1 wherein the mounting structure includes a lens holder (36) for supporting the objective lens system (24) and an outer body which slidably receives the lens holder (36); and wherein the driving mechanism (54,72) includes a rotatable actuator (72) having a threaded portion (94) and a driver (54) having a threaded portion (96), said driver (54) having a segment (64) and said outer body having a slot (60) which receives said segment (64) of the driver (54) and said segment (64) of the driver (54) is drivingly coupled to the lens holder (36), said actuator (72) being rotatable and co-operable with the threaded portion (96) of the driver (54) to impart said non-rotational and translational movement of the objective lens system.

12. A spectacle system (10) as defined in claim 11 wherein the threaded portion (94) of the actuator (72) includes a screw (94) and the threaded portion (96) of the driver (54) includes a hole in the driver (54) receiving the screw (94).

13. A spectacle system as defined in claim 11 including a housing (80) mounted on the outer body said threaded portions (94, 96) of the actuator (72) and the driver (54) being received in the housing (80).

14. A spectacle system as defined in claim 13 wherein the actuator includes a wheel (106) which protrudes from the housing (80) to enable manual rotation of the actuator (72) to impart non-rotational and translational movement to the driver (54) and the lens holder (36).

15. A spectacle system as defined in claim 11 wherein the lens holder (36) has a generally L-shaped slot (5) in registry with the slot (60) in the outer body and said segment (64) of said driver (54) is received in said L-shaped slot (50).

## Patentansprüche

1. Brillensystem zur Benutzung in Verbindung mit einer implantierten Intraokularlinse (10) in jedem Auge mit den folgenden Merkmalen:
ein Brillenrahmen (20);
zwei Objektivlinsensysteme (24), wobei jedes Objektivlinsensystem unabhängig von dem Brillenrahmen durch jeweils eine individuelle Lagerstruktur getragen wird, die am Brillenrahmen (20) angeordnet ist, um das Objektivlinsensystem (24) auf dem Brillenrahmen (20) zur individuellen drehfesten translatorischen Bewegung relativ zum Brillenrahmen (20) längs einer optischen Achse (76) zu bewegen, die durch das Objektivlinsensystem und die entsprechende implantierte Intraokularlinse definiert ist;
der Brillenrahmen (20) ist so konstruiert, daß er in einer Abstandsbeziehung zu dem Kopf einer Person gehalten wird, die implantierte Intraokularlinsen aufweist und wobei jedes Objektivlinsensystem individuell folgende Merkmale aufweist:
einen Antriebsmechanismus (54, 72) mit einem beweglichen Betätigungsglied (54, 72), um die drehfeste translatorische Bewegung des Objektivlinsensystems (24) relativ zum Brillenrahmen (20) längs der optischen Achse (76) zu bewirken und den Abstand zwischen dem Objektivlinsensystem (24) und der wenigstens einen implantierten Intraokularlinse einzustellen;
die optischen Charakteristiken des Objektivlinsensystems und der Bereich der vorgesehenen translatorischen Bewegung sind so gewählt, daß die optischen Charakteristiken jeder implantierten Intraokularlinse ergänzt werden, um Bilder von verschieden weit entfernten Objekten auf der Netzhaut der Augen abzubilden.

2. Brillensystem nach Anspruch 1, bei welchem jeder der Antriebsmechanismen (54, 72) ein drehbares Antriebsglied (72) mit einem Gewindeabschnitt (94) aufweist und jedes Antriebsglied (72) drehbar ist, um den Gewindeabschnitt (94) des Betätigungsgliedes zu drehen und die Drehbewegung und die translatorische Bewegung des Objektivlinsensystems (24) relativ zum Brillenrahmen (20) längs der zugeordneten optischen Achse (76) zu bewirken, um den Abstand zwischen einem solchen Objektivlinsensystem (24) und dem Auge der Person einzustellen, wodurch jedes der ersten und zweiten Objektivtinsensysteme (24) getrennt einstellbar ist.

3. Brillensystem nach Anspruch 2, bei welchem der erste Antriebsmechanismus (54, 72) ein Antriebsglied (54) aufweist, das einen Gewindeabschnitt (96) besitzt, der durch Drehung des Gewindeabschnitts (94) des Betätigungsgliedes (72) des ersten Antriebsmechanismus (54, 72) angetrieben wird, um die drehfeste translatorische Bewegung des ersten Objektivlinsensystems (24) durchzuführen.

4. Brillensystem nach Anspruch 3, bei welchem der Gewindeabschnitt (94) des Betätigungsgliedes (72) des ersten Antriebsmechanismus (54, 72) eine Schraube (94) aufweist und der Gewindeabschnitt (96) des Antriebsgliedes (54) ein Gewindeloch im Antriebsglied ist, das die Schraube (94) aufnimmt.

5. Brillensystem nach Anspruch 3, bei welchem die erste Lagerstruktur einen Schlitz (60) aufweist und das Antriebsglied ein Segment (64) besitzt, das von dem Schlitz aufgenommen ist.

6. Brillensystem nach Anspruch 3, bei welchem die erste Lagerstruktur einen Linsenhalter (36) für das erste Objektivlinsensystem (24) und einen äußeren Körper aufweist, der gleitbar den Linsenhalter (36) aufnimmt, wobei das Antriebsglied (54) ein Segment (64) aufweist und der äußere Körper einen Schlitz (60) besitzt, der das Segment (64) des Antriebsgliedes (54) aufnimmt, wobei das Segment (64) und das Antriebsglied (54) antriebsmäßig mit dem Linsenhalter (36) gekuppelt sind.

7. Brillensystem nach Anspruch 6, mit einem Gehäuse (80), das auf dem äußeren Körper gelagert ist, wobei die Gewindeabschnitte (94, 96) des Betätigungsgliedes und des Antriebsgliedes (54) des ersten Antriebsmechanismus im Gehäuse (80) angeordnet sind.

8. Brillensystem nach Anspruch 7, bei welchem das Betätigungsglied (72) des ersten Antriebsmechanismus ein Rad (106) aufweist, das aus dem Gehäuse (80) vorsteht, um eine manuelle Drehung des Betätigungsgliedes (72) des ersten Antriebsmechanismus zu ermöglichen und um die drehfeste translatorische Bewegung von Antriebsglied (54) und Linsenhalter (36) zu bewirken.

9. Brillensystem nach Anspruch 2, bei welchem der erste Antriebsmechanismus (54, 72) ein Antriebsglied (54) aufweist, das einen Gewindeabschnitt (96) besitzt, der durch Drehung des Gewindeabschnitts (94) des Betätigungsgliedes (72) des ersten Antriebsmechanismus angetrieben wird, um die drehfeste translatorische Bewegung auf das erste Objektivlinsensystem (24) zu übertragen, wobei das Brillensystem (10) ein Gehäuse (80) aufweist, das auf der ersten Lagerstruktur angeordnet ist, wobei die Gewindeabschnitte (94, 96) des Betätigungsgliedes (72) und des Antriebsgliedes (54) des ersten Antriebsmechanismus vom Gehäuse (80) aufgenommen werden.

10. Brillensystem nach Anspruch 2 mit einem ersten und einem zweiten Gehäuse (80), die von der ersten Lagerstruktur bzw. der zweiten Lagerstruktur getragen werden, wobei die Betätigungsglieder (72) von erstem und zweitem Antriebsmechanismus teilweise in dem ersten bzw. zweiten Gehäuse (80) angeordnet sind und aus dem zugeordneten Gehäuse (80) vorstehen, um eine getrennte manuelle Drehung der Betätigungsglieder (72) zu ermöglichen.

11. Brillensystem (10) nach Anspruch 1, bei welchem die Lagerstruktur einen Linsenhalter (36) zur Aufnahme des Objektivlinsensystems (24) und einen äußeren Körper aufweist, der gleitbar den Linsenhalter (36) aufnimmt, wobei der Antriebsmechanismus (54, 72) ein drehbares Betätigungsglied (72) mit einem Gewindeabschnitt (94) und ein Antriebsglied (54) mit einem Gewindeabschnitt (96) aufweist, wobei das Antriebsglied (54) ein Segment (64) besitzt und der äußere Körper einen Schlitz (60) hat, der das Segment (64) des Antriebsgliedes (54) aufnimmt und wobei das Segment (64) des Antriebsgliedes (54) antriebsmäßig mit dem Linsenhalter (36) gekuppelt ist, wobei das Betätigungsglied (72) drehbar mit dem Gewindeabschnitt (96) des Antriebsgliedes (54) zusammenwirkt, um die drehfeste translatorische Bewegung des Objektivlinsensystems herbeizuführen.

12. Brillensystem nach Anspruch 11, bei welchem der Gewindeabschnitt (94) des Betätigungsgliedes (72) eine Schraube (94) aufweist und der Gewindeabschnitt (96) des Antriebsgliedes (54) ein Loch im Antriebsglied (54) ist, in das die Schraube (94) eingeschraubt ist.

13. Brillensystem nach Anspruch 11 mit einem Gehäuse (80), das auf dem äußeren Körper der Gewindeabschnitte (94, 96) des Betätigungsgliedes (72) gelagert ist und das Antriebsglied (54) von dem Gehäuse (80) aufgenommen ist.

14. Brillensystem nach Anspruch 13, bei welchem das Betätigungsglied ein Rad (106) aufweist, das aus dem Gehäuse (80) vorsteht, um eine manuelle Drehung des Betätigungsgliedes (72) herbeizuführen und die drehfeste translatorische Bewegung von Antriebsglied (54) und Linsenhalter (36) zu bewirken.

15. Brillensystem nach Anspruch 11, bei welchem der Linsenhalter (36) einen allgemein L-förmig gestalteten Schlitz (5) aufweist, der auf den Schlitz (60) im äußeren Körper ausgerichtet ist und das Segment (64) des Antriebsgliedes (54) von dem L-förmig gestalteten Schlitz (50) aufgenommen wird.

## Revendications

1. Système de lunettes à utiliser de manière conjointe avec une lentille intraoculaire implantée (10), dans chaque oeil, comprenant :
une monture de lunettes (20) ;
deux systèmes de lentilles d'objectifs (24), la monture de lunettes supportant de manière indépendante chaque système de lentille de l'objectif ;
une structure de montage individuelle supportée par la monture de lunettes (20) pour monter le système de lentille de l'objectif (24) sur la monture de lunettes (20) pour effectuer un mouvement individuel d'antirotation et de translation par rapport à la monture de lunettes (20) le long d'un axe optique (76) défini par le. système de lentille de l'objectif et par la lentille intraoculaire implantée correspondante ;
la monture de lunettes (20) étant construite pour supporter ledit système de l'objectif sur la tête d'un individu dans une relation à l'écart des lentilles intraoculaires implantées ; et chaque système de lentille de l'objectif comprenant, à titre individuel
un mécanisme d'entraînement (54, 72) englobant un actionneur mobile (54, 72) pour conférer ledit mouvement d'antirotation et de translation du système de lentille de l'objectif (24) par rapport à la monture de lunettes (20) le long de l'axe optique (76) dans le but de réduire la distance entre le système de lentille de l'objectif (24) et la au moins une lentille intraoculaire implantée ;
les caractéristiques optiques du système de lentille de l'objectif (24) et la portée du mouvement de translation obtenus étant sélectionnés pour apporter un complément aux caractéristiques optiques de chaque lentille intraoculaire implantée de façon à permettre une formation d'image d'une variété d'objets positionnés à des distances différentes sur la rétine des yeux.

2. Système de lunettes selon la revendication 1, dans lequel chacun desdits mécanismes d'entraînement (54, 72) englobe un actionneur rotatif (72) possédant une portion filetée (94), chacun desdits actionneurs (72) étant rotatif pour faire tourner la portion filetée (94) de l'actionneur dans le but de conférer ledit mouvement d'antirotation et de translation au système de lentille de l'objectif (24) par rapport à la monture de lunettes (20) le long de l'axe optique associé (76) dans le but de régler la distance entre un tel système de lentille de l'objectif (24) et l'oeil d'un individu, par lequel chacun desdits premier et deuxième systèmes de lentilles de l'objectif (24) peut être réglé de manière séparée.

3. Système de lunettes selon la revendication 2, dans lequel le premier mécanisme d'entraînement (54, 72) englobe un dispositif d'entraînement (54) comportant une portion filetée (96) qui est entraînée par rotation de la portion filetée (94) de l'actionneur (72) du premier mécanisme d'entraînement (54, 72) dans le but de conférer ledit mouvement d'antirotation et de translation au premier système de lentille de l'objectif (24).

4. Système de lunettes selon la revendication 3, dans lequel la portion filetée (94) de l'actionneur (72) du premier mécanisme d'entraînement (54, 72) englobe une vis (94) et la portion filetée (96) du dispositif d'entraînement (54) englobe un trou pratiqué dans le dispositif d'entraînement, dans lequel vient se loger la vis (94).

5. Système de lunettes selon la revendication 3, dans lequel la première structure de montage possède une fente (60) et le dispositif d'entraînement possède un segment (64) qui vient se loger dans la fente.

6. Système de lunettes selon la revendication 3, dans lequel la première structure de montage englobe un support de lentille (36) pour supporter le premier système de lentille de l'objectif (24) et un corps externe qui vient se loger par glissement dans le support de lentille (36), ledit dispositif d'entraînement (54) possédant un segment (64) et ledit corps possédant une fente (60) dans laquelle vient se disposer ledit segment (64) du dispositif d'entraînement (54) et ledit segment (64) du dispositif d'entraînement (54) étant couplé en entraînement au support de lentille (36).

7. Système de lunettes selon la revendication 6, englobant un boîtier (80) monté sur le corps externe, lesdites portions filetées (94, 96) de l'actionneur (72) et du dispositif d'entraînement (54) du premier mécanisme d'entraînement venant se loger dans le boîtier (80).

8. Système de lunettes selon la revendication 7, dans lequel l'actionneur (72) du premier mécanisme d'entraînement englobe une roue (106) qui fait saillie par rapport au boîtier (80) pour permettre la rotation manuelle de l'actionneur (72) du premier mécanisme d'entraînement dans le but de conférer un mouvement d'antirotation et de translation au dispositif d'entraînement (54) et au support de lentille (36).

9. Système de lunettes selon la revendication 2, dans lequel le premier mécanisme d'entraînement (54, 72) englobe un dispositif d'entraînement (54) comportant une portion filetée (96) qui est entraînée par la rotation de la portion filetée (94) de l'actionneur (72) du premier mécanisme d'entraînement dans le but de conférer ledit mouvement d'antirotation et de translation au premier système de lentille de l'objectif (24), le système de lunettes (10) englobant un boîtier (80) monté sur la première structure de montage, lesdites portions filetées (94, 96) de l'actionneur (72) et du dispositif d'entraînement (54) du premier mécanisme d'entraînement venant se loger dans le boîtier (80).

10. Système de lunettes selon la revendication 2, englobant des premier et deuxième boîtiers (80) supportés par les première et deuxième structures de montage, respectivement, les actionneurs (72) des premier et deuxième mécanismes d'entraînement venant se loger en partie dans les premier et deuxième boîtiers (80), respectivement et faisant saillie par rapport aux boîtiers associés (80) pour permettre une rotation manuelle séparée des actionneurs (72).

11. Système de lunettes (10) selon la revendication 1, dans lequel la structure de montage englobe un support de lentille (36) pour supporter le système de lentille de l'objectif (24) et un corps externe qui vient se loger par glissement dans le support de lentille (36) ; et dans lequel le mécanisme d'entraînement (54, 72) englobe un actionneur rotatif (72) comportant une portion filetée (94) et un dispositif d'entraînement (54) comportant une portion filetée 96, ledit dispositif d'entraînement (54) possédant un segment (64) et ledit corps externe possédant une fente (60) dans laquelle vient se loger ledit segment (64) du dispositif d'entraînement (54), et ledit segment (64) du dispositif d'entraînement (54) étant couplé en entraînement au support de lentille (36), ledit actionneur (72) étant rotatif et à même de coopérer avec la portion filetée (96) du dispositif d'entraînement (54) dans le but de conférer ledit mouvement d'antirotation et de translation du système de lentilles de l'objectif.

12. Système de lunettes (10) selon la revendication 11, dans lequel la portion filetée (94) de l'actionneur (72) englobe une vis (94) et la portion filetée (96) du dispositif d'entraînement (54) englobe un trou pratiqué dans le dispositif d'entraînement (54), dans lequel vient se disposer la vis (94).

13. Système de lunettes selon la revendication 11, englobant un boîtier (80) monté sur le corps externe, lesdites portions filetées (94, 96) de l'actionneur (72) et du dispositif d'entraînement (54) venant se loger dans le boîtier (80).

14. Système de lunettes selon la revendication 13, dans lequel l'actionneur englobe une roue (106) qui fait saillie par rapport au boîtier (80) pour permettre la rotation manuelle de l'actionneur (72) dans le but de conférer le mouvement d'antirotation et de translation au dispositif d'entraînement (54) et au support de lentille (36).

15. Système de lunettes selon la revendication 11, dans lequel le support de lentille (36) possède une fente (50) généralement en L mise en registre avec la fente (60) dans le corps externe, et ledit segment (64) dudit dispositif d'entraînement (54) vient se loger dans ladite fente en L (50).
